# FASCICULE DE BREVET EUROPEEN

(11) **EP 4 480 751 B1**
(45) Date de publication et mention de la délivrance du brevet: **28.01.2026**
(21) Numéro de dépôt: 23315331.1
(22) Date de dépôt: 30.08.2023
(51) Int. Cl.: B60P 3/34, B60P 3/36, B60R 15/00

(54) **SYSTÉME POUR L'AMÉNAGEMENT INTERIEUR D'UN VÉHICULE, SYSTÉME D'AMEUBLEMENT D'UNE ZONE DE CHARGEMENT D'UN VÉHICULE ET VÉHICULE ASSOCIÉ**
SYSTEM ZUR INNENEINRICHTUNG EINES FAHRZEUGS, EINRICHTUNG ZUR EINRICHTUNG EINER LADEFLÄCHE EINES FAHRZEUGS UND FAHRZEUG
SYSTEM FOR INTERIOR EQUIPMENT OF A VEHICLE, FURNISHING SYSTEM OF A LOADING AREA OF A VEHICLE AND ASSOCIATED VEHICLE

(30) Priorité: 23.06.2023 FR 2306592
(43) Date de publication de la demande: 25.12.2024
(73) Titulaire: Cazes, Maurice, 64140 Billère (FR)
(72) Inventeur: Cazes, Maurice, 64140 Billère (FR)
(74) Mandataire: A.P.I. Conseil

(56) Documents cités:
- AU-B2- 2010 202 803
- CN-U- 209 225 083

## Description

### Domaine technique

L'invention concerne le domaine de l'aménagement intérieur des véhicules, plus particulièrement de la zone de chargement des véhicules destinés à être habitables. Le système d'aménagement selon l'invention peut en particulier être utilisé pour l'aménagement de véhicules qui présentent une zone de chargement pour y aménager un habitat tout en étant suffisamment importante pour pouvoir accueillir lesdits systèmes. En particulier, l'invention concerne un système pour l'aménagement intérieur d'un véhicule qui comprend un module d'aménagement d'une zone de chargement du véhicule.

L'invention concerne en outre un système d'ameublement d'une zone de chargement d'un véhicule et qui comprend notamment le système pour l'aménagement intérieur d'un véhicule. L'invention concerne également un véhicule aménagé avec lesdits systèmes.

### Technique antérieure

Ci-après, nous décrivons l'art antérieur connu à partir duquel l'invention a été développée.

Le développement des modes de voyage autonomes a vu l'essor, il y a quelques décennies, de véhicules routiers communément appelés véhicules récréationnels et qui regroupent les « camping-car » lorsque les véhicules ont une cellule rapportée sur un châssis/cabine de conduite, « motor-home » lorsque la cellule intègre la cabine de conduite ou « van » lorsque le véhicule est un fourgon aménagé. Ces véhicules comprennent tous les équipements de base de la vie courante auxquels un voyageur peut aspirer. En effet, ces véhicules comprennent bien souvent une cabine de douche, des sanitaires, un nécessaire de cuisine et une partie couchette et éventuellement un meuble de toilette/cuvette WC, et, au mieux pour les vans, un espace commun douche/meuble de toilette/cuvette WC. Aucun de ces véhicules, et encore moins les vans, ne possède trois espaces indépendants : cabine de douche, meuble de toilette, cuvette WC. L'aménagement de ces véhicules est bien souvent un défi pour les constructeurs qui doivent optimiser au maximum l'espace de ces véhicules pour pouvoir y intégrer un maximum de fonctionnalités.

De nombreuses solutions visant à optimiser l'espace disponible pour l'aménagement de ces véhicules ont vu le jour, une première solution décrite dans le document brevet n°KR20220146884 propose une solution permettant l'optimisation de l'espace pour l'installation sanitaire. Le système proposé permet de réduire l'espace occupé par un sanitaire telle qu'une cuvette WC en sécurisant l'espace nécessaire à l'utilisation des toilettes en utilisant une cabine pliante installée sur le côté d'un meuble. Un meuble entourant un évier est monté, dans lequel des toilettes sèches sont placés. Une cloison qui se déplie est montée sur le meuble de l'évier et permet de former un espace confiné dans lequel un utilisateur peut utiliser les toilettes.

Une deuxième solution décrite dans le document brevet n°KR102253177 propose une solution permettant l'optimisation de l'espace de la salle de bain de manière variable afin de maximiser l'espace intérieur utilisable du véhicule. Le système proposé permet de de réduire l'espace occupé par la salle de bain lorsque celle-ci n'est pas utilisée et d'agrandir l'espace de la salle de bain, de manière variable, lorsque celle-ci est utilisée.

AU 2010 202 803 B2 divulgue un système pour l'aménagement intérieur d'un véhicule similaire au préambule de la revendication 1.

Depuis quelques années, l'aménagement des fourgons, vans ou camionnettes est en plein essor. Alternative bien moins onéreuse que l'achat d'un camping-car, de plus en plus de sociétés proposent leurs services pour l'aménagement sur-mesure d'anciens véhicules utilitaires. Des kits sont également disponibles à l'achat pour aménager soi-même son véhicule. Cependant, l'aménagement de ces types de véhicules impliquent de faire des compromis importants concernant le choix des fonctionnalités à intégrer dû à un espace disponible moindre par rapport aux camping-cars.

Cependant, les solutions développées pour les véhicules de type camping-car restent peu adaptées pour les véhicules de plus petite taille et il n'existe pas de solutions intégrées permettant d'aménager directement l'ensemble de la zone de chargement du véhicule. En outre, les solutions proposées ne permettent pas de recréer des pièces de vie séparées. En effet, comme cela est souvent le cas, la zone de stockage du véhicule forme une unique pièce dans laquelle sont agencés les éléments qui caractérisent différents espaces de vie.

Ainsi, il existe un besoin pour optimiser l'espace intérieur dans un véhicule tout en conservant un maximum de fonctionnalités.

L'invention a pour but de remédier aux inconvénients de l'art antérieur. En particulier, l'invention a pour but de proposer un système d'aménagement intérieur intégrable dans tout type de véhicule, et permettant d'optimiser l'espace disponible en fonction des besoins de l'utilisateur tout en lui permettant de conserver un plus grand nombre de fonctionnalités que les solutions proposées jusqu'à maintenant.

L'invention a en outre pour but de proposer un système d'ameublement incluant le système d'aménagement intérieur d'un véhicule, ledit système d'ameublement permet en outre d'optimiser l'espace occupé par les dispositifs d'assise.

### Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Cependant, ce résumé ne constitue pas un aperçu exhaustif de tous les aspects, modes de réalisation et exemples de l'invention. Son seul but est de présenter des aspects, modes de réalisation et exemples sélectionnés de l'invention sous une forme concise en guise d'introduction à la description plus détaillée des aspects, modes de réalisation et exemples de l'invention qui suivent le résumé.

L'invention vise en particulier un système pour l'aménagement intérieur d'un véhicule, le système comprenant un module d'aménagement d'une zone de chargement du véhicule, le module d'aménagement comportant :
- une première cloison qui présente des dimensions adaptées pour permettre une séparation entre un poste de conduite et la zone de chargement du véhicule, la première cloison comprenant en outre un passage central,
- une deuxième et une troisième cloisons sensiblement perpendiculaires à la première cloison,
- une quatrième et une cinquième cloisons sensiblement perpendiculaires à la deuxième et à la troisième cloison respectivement, de sorte que les première, deuxième et quatrième cloisons forment un premier espace d'accueil de dimensions adaptées à un premier élément de mobilier et, les première, troisième et cinquième cloisons forment un deuxième espace d'accueil de dimensions adaptées à un deuxième élément mobilier,
- au moins un premier moyen de guidage transversal positionné entre la deuxième cloison et le passage central et un deuxième moyen de guidage transversal positionné entre la troisième cloison et le passage central,
- la première cloison et chaque moyen de guidage transversal étant adaptés pour permettre respectivement la fixation du premier ou du deuxième élément de mobilier et, sont agencés pour que le premier ou le deuxième élément de mobilier passe d'une première configuration repliée, dans laquelle le premier élément de mobilier ou le deuxième élément de mobilier est positionné entre le passage central et la deuxième ou la troisième cloison, à une deuxième configuration déployée, dans laquelle le premier élément de mobilier ou le deuxième élément de mobilier comble le passage central.

Le demandeur a développé un système particulièrement adapté aux véhicules dont le but premier de la zone de chargement n'est pas d'y aménager un espace de vie. Le système selon l'invention permet d'optimiser l'espace des véhicules de type récréationnel mais plus particulièrement des espaces de stockage des vans et fourgons. Le système permet en outre d'optimiser l'espace disponible en permettant le déploiement de plusieurs éléments de mobilier au sein d'un même espace en fonction du choix de l'utilisateur tout en laissant un maximum d'espace disponible lorsque les éléments de mobilier ne sont pas utilisés.

Selon d'autres caractéristiques optionnelles du système, ce dernier peut inclure facultativement une ou plusieurs des caractéristiques suivantes, seules ou en combinaison :
- la première cloison comprend deux troisième moyen de guidage transversal respectivement adaptés pour permettre la fixation du premier élément de mobilier et du deuxième élément de mobilier, les deux troisième moyen de guidage transversal étant respectivement agencés pour que le premier élément de mobilier et le deuxième élément de mobilier passent de la première configuration repliée à la deuxième configuration déployée.
- le premier élément de mobilier est positionné entre la quatrième cloison et la première cloison et le deuxième élément de mobilier est positionné entre la cinquième cloison et la première cloison.
- le premier élément de mobilier est agencé pour pouvoir passer en configuration déployée lorsque le deuxième élément de mobilier est en position repliée et inversement.

- le module d'aménagement comporte une sixième cloison sensiblement perpendiculaire à la troisième cloison de sorte que les troisième, cinquième et sixième cloisons forment un troisième espace d'accueil adapté pour accueillir une arrivée et une évacuation d'eau.
- le premier élément de mobilier correspond à une cabine équipée d'une porte, la cabine étant agencée pour permettre, en configuration déployée, l'ouverture et la fermeture de ladite porte.

Selon un deuxième objet, l'invention porte sur un système d'ameublement d'une zone de chargement d'un véhicule, ledit système comprenant :
- un système pour l'aménagement intérieur d'un véhicule selon l'invention,
- un dispositif d'assise comportant :
   o un siège comprenant une assise sur laquelle sont montées une pluralité d'éléments de fixation,
   o un support de siège comprenant une pluralité d'orifices de fixation agencées pour recevoir les éléments de fixation,
   o un moyen de solidarisation/désolidarisation positionné dans le support de siège et comprenant une pluralité d'ouvertures adaptées pour permettre le passage des éléments de fixation, le moyen de solidarisation/désolidarisation étant en outre agencé pour permettre une fixation réversible entre le siège et le support de siège.

Un tel système permet en outre d'optimiser l'espace en offrant la possibilité de conserver ou non un dispositif d'assise en fonction des besoins.

Selon d'autres caractéristiques optionnelles du procédé, ce dernier peut inclure facultativement une ou plusieurs des caractéristiques suivantes, seules ou en combinaison :
- le siège comprend un dossier relié à l'assise, et dans lequel le siège est agencé pour se fixer au support de siège selon une première position dans laquelle la pluralité des orifices de fixation coïncident avec au moins deux éléments de fixation et selon une deuxième position dans laquelle la pluralité des orifices de fixation coïncident avec au moins deux autres éléments de fixation. Cela permet de passer le dispositif d'assise dans différentes configurations qui peuvent être adaptées soit lorsque le véhicule est en mouvement soit lorsque le véhicule est à l'arrêt.
- en première position, le dossier est sensiblement perpendiculaire par rapport à un axe longitudinal de la première cloison, et en deuxième position, le dossier est sensiblement parallèle par rapport à l'axe longitudinal de la première cloison.

Selon un troisième objet, l'invention porte sur un véhicule comprenant un système pour l'aménagement intérieur selon l'invention ou un système d'ameublement selon l'invention.

Selon d'autres caractéristiques optionnelles du véhicule, ce dernier peut comprendre, en partie arrière, un moyen d'ouverture réversible agencé pour passer d'une position ouverte permettant l'accès à la zone de chargement du véhicule à une position fermée, ledit véhicule comprenant un hayon transparent monté sur un cadre de la partie arrière du véhicule, ledit hayon transparent étant agencé pour passer d'une première configuration déployée, lorsque le moyen d'ouverture réversible est en position ouverte, à une deuxième configuration repliée, lorsque le moyen d'ouverture réversible est en position fermée.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un schéma d'un mode de réalisation d'un système pour l'aménagement intérieur d'un véhicule selon l'invention vu de côté.
[Fig. 2] La figure 2 représente un schéma d'un mode de réalisation d'un système pour l'aménagement intérieur d'un véhicule selon l'invention vu de face.
[Fig. 3] La figure 3 représente un schéma d'un mode de réalisation d'un système pour l'aménagement intérieur d'un véhicule selon l'invention vu de dessus.
[Fig. 4A] La figure 4A représente un schéma d'un mode de réalisation d'un système d'ameublement d'une zone de chargement d'un véhicule selon l'invention dans lequel les dispositifs d'assise sont présentés selon une première configuration.
[Fig. 4B] La figure 4B représente un schéma d'un mode de réalisation d'un système d'ameublement d'une zone de chargement d'un véhicule selon l'invention dans lequel les dispositifs d'assise sont présentés selon une deuxième configuration.
La figure 5 représente un schéma d'un mode de réalisation d'un dispositif d'assise selon l'invention.
[Fig. 6] La figure 6 représente un schéma d'un mode de réalisation d'une partie d'un dispositif d'assise selon l'invention.
[Fig. 7] La figure 7 représente un schéma d'une partie de véhicule selon l'invention et comprenant un hayon transparent.

Les figures ne respectent pas nécessairement les échelles, notamment en épaisseur, et ce à des fins d'illustration.

Des aspects de la présente invention sont décrits en référence à des schémas fonctionnels d'appareils (systèmes) selon des modes de réalisation de l'invention.

### Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Les termes « **fixe** », « **fixé** », ou « **fixer** », au sens de l'invention correspondent à l'association directe ou indirecte d'un élément par rapport à un autre sans mouvement de ces éléments l'un par rapport à l'autre, inamovible ou amovible avec un ou plusieurs éléments intermédiaires.

Le terme « **amovible** » au sens de l'invention correspond à la capacité à être détaché, enlevé ou démonté aisément sans avoir à détruire des moyens de fixation soit parce qu'il n'y a pas de moyen de fixation soit parce que les moyens de fixation sont aisément et rapidement démontables (e.g. encoche, vis, languette, ergot, clips). Par exemple, par amovible, il faut comprendre que l'objet n'est pas fixé par soudure ou par un autre moyen non prévu pour permettre de détacher l'objet.

Ainsi, l'invention concerne un système 1 pour l'aménagement intérieur d'un véhicule, le système 1 comprenant un module d'aménagement d'une zone de chargement du véhicule. De préférence, pour l'aménagement intérieur d'un véhicule de type récréationnel, préférentiellement un van et/ou un fourgon.

Le module d'aménagement selon l'invention comporte une première cloison, une deuxième cloison, une troisième cloison, une quatrième cloison et une cinquième cloison, au moins un premier et un deuxième moyen de guidage transversal.

Comme mentionné précédemment, le module d'aménagement selon l'invention a pour vocation d'être installé à l'intérieur du véhicule, plus particulièrement dans un espace définissant une zone de stockage ou de chargement du véhicule. A titre d'exemple, la zone de stockage ou de chargement du véhicule peut correspondre à l'ensemble de l'espace intérieur du véhicule hormis l'espace dédié au poste de conduite. De manière préférée, la zone de stockage se situe directement derrière le poste de conduite du véhicule.

Ainsi, le module d'aménagement présente préférentiellement des dimensions adaptées à l'espace intérieur du véhicule, délimité par la carrosserie du véhicule, de manière à y être aisément intégré. De manière préférée, les éléments qui constituent le module d'aménagement peuvent être fixés à une structure de soutien 70 agencée pour reposer sur le plancher de la zone de chargement du véhicule. La structure de soutien 70 peut également être fixée au plancher de la zone de chargement du véhicule. En complément, un plancher secondaire 80 peut être monté sur la structure de soutien 70. Pour cela, la structure de soutien 70 peut comprendre une pluralité de solives sur lesquelles peuvent être fixées les éléments du module d'aménagement ou encore le plancher secondaire 80.

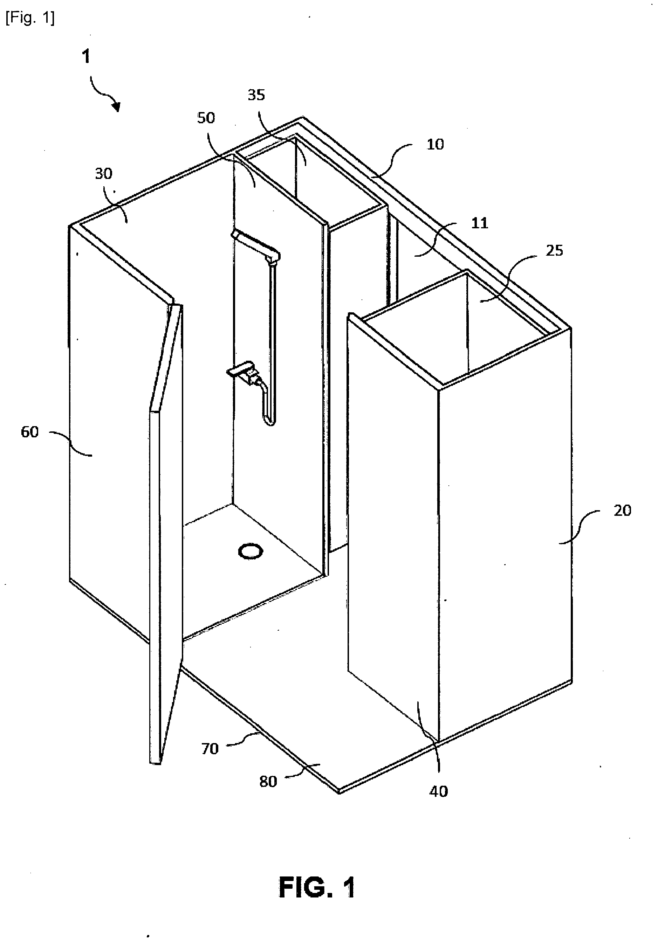

Dans l'invention, comme présenté en lien avec la figure 1, le module d'aménagement d'un système 1 pour l'aménagement intérieur d'un véhicule comporte une première cloison 10 qui présente des dimensions adaptées pour permettre une séparation entre un poste de conduite et la zone de chargement du véhicule.

La première cloison 10 comprend en outre un passage central 11. Le passage central 11 est de préférence agencé pour permettre l'accès, depuis le module d'aménagement, au poste de conduite et vice versa.

Toujours dans l'invention, les deuxième et troisième cloisons 20, 30 du module d'aménagement sont sensiblement perpendiculaires à la première cloison 10.

En outre, les quatrième et cinquième cloisons 40, 50 sont respectivement positionnées de manière sensiblement perpendiculaires aux deuxième et troisième cloisons 20, 30. Plus particulièrement, les première, deuxième et quatrième cloisons 10, 20, 40 forment un premier espace d'accueil. Les première, deuxième et quatrième cloisons 10, 20, 40 qui forment le premier espace d'accueil présentent ainsi des dimensions adaptées à un premier élément de mobilier 25.

De plus, les première, troisième et cinquième cloisons 10, 30, 50 forment un deuxième espace d'accueil de dimensions adaptées à un deuxième élément mobilier 35.

Selon l'invention, le premier moyen de guidage transversal du module d'aménagement est positionné entre la deuxième cloison 20 et le passage central 11 et le deuxième moyen de guidage transversal est positionné entre la troisième cloison 30 et le passage central 11.

En outre, la première cloison 10 et les premier et deuxième moyens de guidage transversal sont adaptés pour permettre la fixation du premier ou du deuxième élément de mobilier 25, 35. Une fois fixé sur les premier et deuxième moyens de guidage transversal, les éléments de mobilier 25, 35 peuvent subir un mouvement de translation selon l'axe du moyen de guidage transversal.

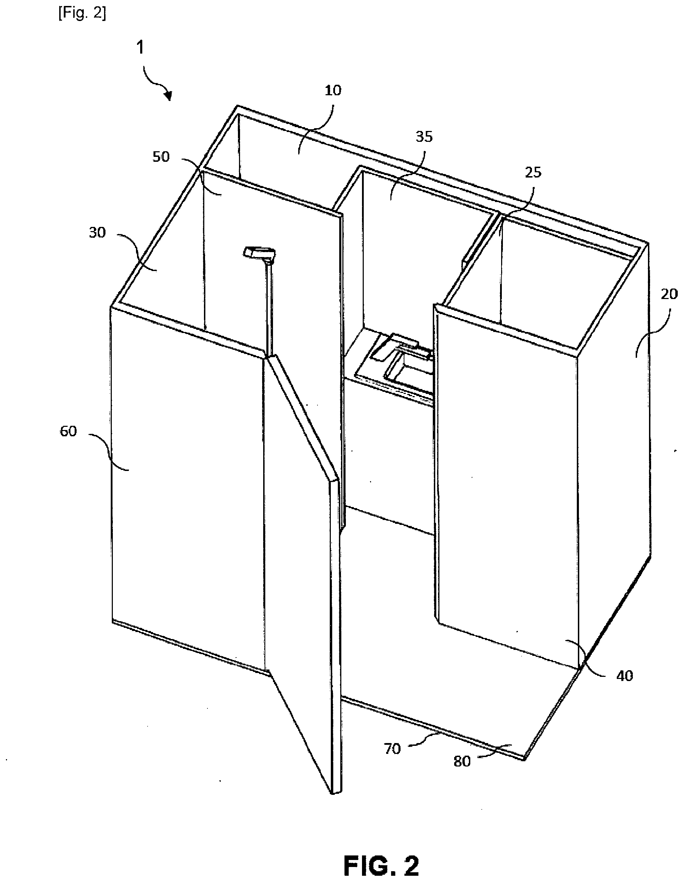

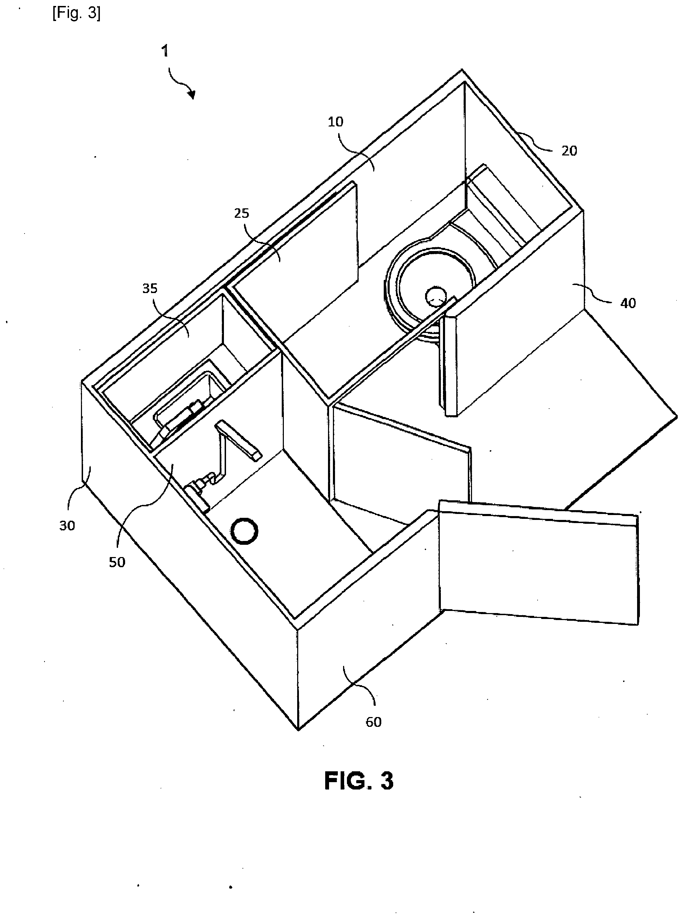

Afin d'optimiser l'espace à disposition, comme présenté en lien avec les figures 2 et 3, la première cloison 10 et chaque moyen de guidage transversal sont agencés pour que le premier ou le deuxième élément de mobilier 25, 35 passe d'une première configuration repliée, dans laquelle le premier élément de mobilier 25 ou le deuxième élément de mobilier 35 est positionné entre le passage central 11 et la deuxième ou la troisième cloison 20, 30, à une deuxième configuration déployée, dans laquelle le premier élément de mobilier 25 ou le deuxième élément de mobilier 35 comble le passage central 11. Un tel agencement permet ainsi d'utiliser un même espace pour déployer différents éléments de mobiliers offrant des fonctionnalités diverses à un utilisateur tout en assurant la possibilité l'accès au poste de conduite lorsque les éléments de mobilier 25, 35 sont en configuration repliée.

Pour optimiser encore plus l'espace occupé par les éléments de mobiliers, le premier élément de mobilier 25 peut être agencé pour pouvoir passer en configuration déployée lorsque le deuxième élément de mobilier 35 est en position repliée et inversement. Cela permet ainsi de pouvoir utiliser le premier ou le deuxième élément de mobilier 25, 35 uniquement lorsque l'élément de mobilier qui n'est pas utilisé est en configuration repliée.

De manière préférée, les deuxièmes moyens de guidage transversal peuvent être positionnés sur la partie haute de la première cloison 10, entre les deuxième et troisième cloisons 20, 30, adjacentes à la première cloison 10, et le passage central 11.

De manière avantageuse, les premier et deuxième moyens de guidage transversal peuvent être équipés de dispositifs de verrouillage afin de permettre de bloquer le moyen de guidage transversal dans différentes positions. En outre, les premier et deuxième moyens de guidage transversal peuvent comprendre un système de butées avec amortisseurs de fin de course.

A titre d'exemples, les premier et deuxième moyens de guidage transversal peuvent respectivement correspondre à un rail de guidage à galets ou à billes fixé directement sur la première cloison 10. De plus, les premier et deuxième moyens de guidage transversal peuvent correspondre à des glissières télescopiques à billes ou à galets et qui permettent une extraction totale ou partielle jusqu'à 200% de la longueur de la glissière télescopique.

Afin de faciliter le passage de la configuration repliée à la configuration déployée des différents éléments de mobilier, la première cloison 10 peut comprendre deux troisièmes moyens de guidage transversal respectivement adaptés pour permettre la fixation du premier élément de mobilier 25 et du deuxième élément de mobilier 35. Les deux troisièmes moyens de guidage transversal peuvent être respectivement agencés pour que le premier élément de mobilier 25 et le deuxième élément de mobilier 35 passent de la première configuration repliée à la deuxième configuration déployée. Les troisièmes moyens de guidage transversal sont de préférence positionnés sur la partie basse de la première cloison 10, entre les deuxième et troisième cloisons 20, 30, adjacentes à la première cloison 10, et le passage central 11.

Dans un mode de réalisation particulier d'un système 1 pour l'aménagement intérieur d'un véhicule selon l'invention, le premier élément de mobilier 25 peut correspondre à une cabine équipée d'une porte, la cabine étant agencée pour permettre, en configuration déployée, l'ouverture et la fermeture de ladite porte. Optionnellement, ladite cabine peut comprendre un cabinet de toilette de type connu, notamment qui peut être retrouvé dans la plupart des fourgons aménagés.

En alternative ou en complément, le deuxième élément de mobilier 35 peut correspondre à un meuble équipé d'un évier et d'un système de raccordement à une arrivée et à une évacuation d'eau.

Afin de limiter au plus l'espace occupé par les éléments de mobiliers, le premier élément de mobilier 25 peut être positionné entre la quatrième cloison 40 et la première cloison 10 et le deuxième élément de mobilier 35 peut être positionné entre la cinquième cloison 50 et la première cloison 10.

Comme déjà mentionné, un des objectifs de l'invention est de permettre la formation de pièces fonctionnelles tout en optimisant l'espace à disposition. Ainsi, dans un mode de réalisation d'un système 1 pour l'aménagement intérieur d'un véhicule, le module d'aménagement peut comporter une sixième cloison 60, comme présenté en lien avec les figures 1 à 3, sensiblement perpendiculaire à la troisième cloison 30 de sorte que les troisième, cinquième et sixième cloisons 30, 50, 60 forment un troisième espace d'accueil adapté pour accueillir une arrivée et une évacuation d'eau. Dans ce mode de réalisation, la cinquième cloison 50 est positionnée à une distance de la première cloison 10 adaptée aux dimensions du deuxième élément de mobilier 35 et suffisante pour que le deuxième élément de mobilier 35 occupe, en configuration repliée, sensiblement tout l'espace entre la première cloison 10 et la cinquième cloison 50. En outre, la cinquième cloison 50 est également utilisée pour la formation du troisième espace d'accueil permettant ainsi d'optimiser encore plus l'espace disponible.

Selon un deuxième aspect, l'invention porte sur un système d'ameublement d'une zone de chargement d'un véhicule. Un tel système comprend un système 1 pour l'aménagement intérieur d'un véhicule selon l'invention et un dispositif d'assise. De préférence, pour l'ameublement d'une zone de chargement d'un véhicule de type récréationnel, préférentiellement un van et/ou un fourgon.

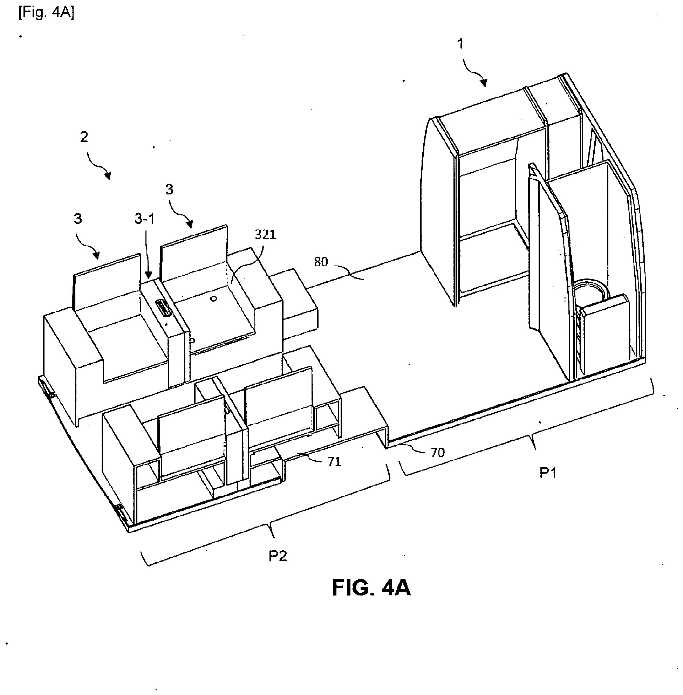

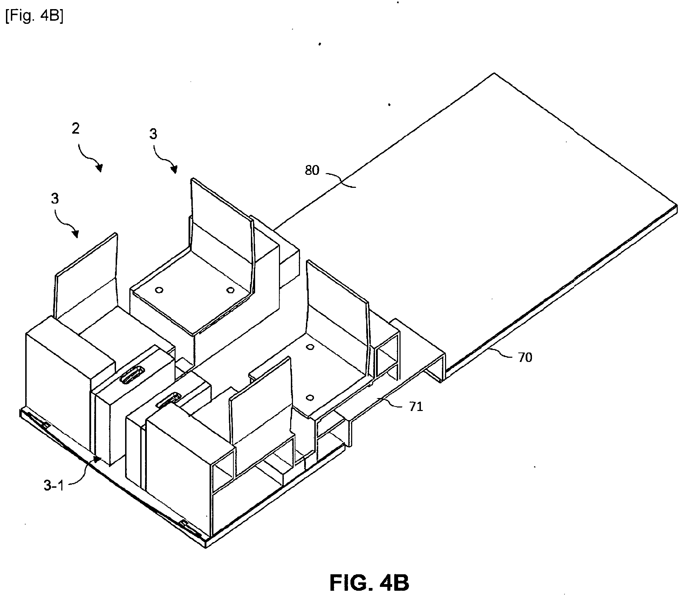

Comme présenté en figure 4A, le système d'ameublement 2 d'une zone de chargement d'un véhicule comprend un dispositif d'assise 3 et un système 1 pour l'aménagement intérieur d'un véhicule selon l'invention. Sur les figures 4A et 4B, le système d'ameublement 2 d'une zone de chargement est présenté en deux parties, la première partie P1 est la partie destinée à être située derrière le poste de conduite du véhicule. La deuxième partie P2 principalement représentée sur les figures 4At 4B est la partie destinée à être située à l'arrière du véhicule, à l'opposé du poste de conduite.

A l'instar du module d'aménagement, au moins une partie des éléments qui constituent le dispositif d'assise 3 peut être fixée à la structure de soutien 70 agencée pour reposer sur le plancher de la zone de chargement du véhicule. La structure de soutien 70 peut également comprendre une structure surélevée 71 adaptée pour épouser la forme du passage de roue que l'on retrouve couramment à l'arrière de la zone de chargement de certains types de véhicules utilitaires, tels que les fourgons, camionnettes.

La figure 4A présente un mode de réalisation d'un système d'ameublement 2 selon l'invention qui comprend quatre dispositifs d'assise 3 positionnés, deux à deux, face à face. Chaque paire de dispositif d'assise 3 est séparé par un élément de rangement 3-1 amovible agencé pour qu'un côté de l'élément de rangement 3-1 amovible forme un accoudoir. L'élément de rangement 3-1 peut prendre une forme parallélépipédique et comprendre un espace creux servant de rangement pour divers accessoires.

Dans la configuration présentée en figure 4A, les dispositifs d'assise 3 sont adaptés pour une utilisation lorsque le véhicule n'est pas en mouvement. Dans la configuration présentée en figure 4B, les dispositifs d'assise 3 sont adaptés pour une utilisation lorsque le véhicule est en mouvement. En effet, deux des dispositifs d'assise positionnées face à face peuvent passer dans une deuxième position, par rotation. Dans cette configuration, l'élément de rangement 3-1 peut être enlevé afin de permettre à un utilisateur de s'asseoir et de positionner ses membres inférieurs, en lieu et place de l'élément de rangement 3-1, entre un premier et un deuxième dispositif d'assise 3.

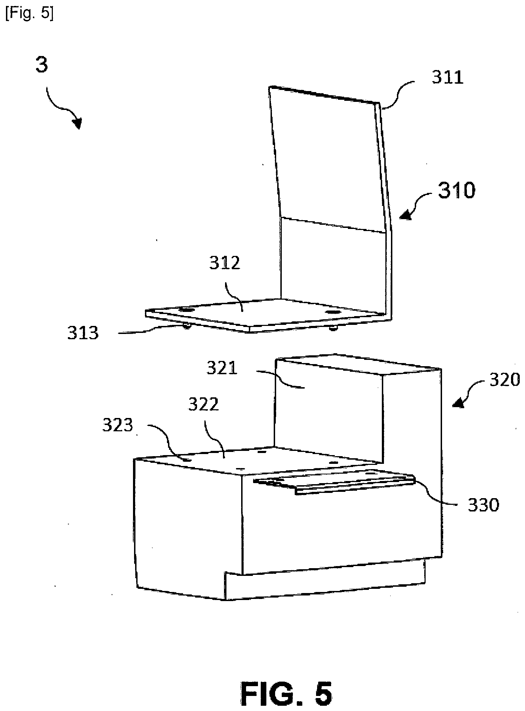

Ainsi, tel qu'illustré en figure 5, le dispositif d'assise 3 selon l'invention comporte un siège 310 comprenant une assise 312 sur laquelle sont montées une pluralité d'éléments de fixation 313.

A titre d'exemple illustratif, les éléments de fixation 313 peuvent correspondre à des goujons avec gorge, la gorge du goujon correspondant à une partie rainurée du goujon dont le diamètre est inférieur à celui du goujon (de la partie non rainurée du goujon).

Le dispositif d'assise 3 selon l'invention comporte en outre un support de siège 320 une pluralité d'orifices de fixation 323 agencées pour recevoir les éléments de fixation 313.

De manière préférée, les orifices de fixation 323 sont agencés pour permettre la réception des éléments de fixation 313 et pour assurer le maintien du siège 310 au support de siège 320. Notamment, les orifices de fixation 323 peuvent être agencés pour permettre une liaison par encastrement des éléments de fixation 313. De manière encore plus préférée, les orifices de fixation 323 présentent un premier évidement dont le diamètre est adapté pour accueillir le goujon avec gorge. Les orifices de fixation 323 peuvent en outre présenter un deuxième évidement qui présente un diamètre inférieur à celui du premier évidement et qui permet d'accueillir la partie rainurée dite « gorge » du goujon et ainsi assurer le maintien du siège 310 au support de siège 320.

Toujours dans l'invention, afin de faciliter le positionnement du dispositif d'assise 3, ledit dispositif d'assise comporte un moyen de solidarisation/désolidarisation 330 positionné dans le support de siège 320. Selon un mode de réalisation, le moyen de solidarisation/désolidarisation 330 peut être intégré dans un évidement pratiqué dans le support de siège 320. Des ouvertures sont ainsi pratiquées dans le support de siège 320 afin de permettre la solidarisation/désolidarisation du siège 310 au support de siège 320.

Le moyen de solidarisation/désolidarisation 330 comprend une pluralité d'ouvertures 331 adaptées pour permettre le passage des éléments de fixation 313 et est en outre agencé pour permettre une fixation réversible entre le siège 310 et le support de siège 320. Plus particulièrement, le moyen de solidarisation/désolidarisation 330 peut être agencé pour permettre un positionnement adéquat entre les éléments de fixation 313 et les orifices de fixation 323 et ainsi assurer leurs liaisons.

De manière préférée, les ouvertures 331 sont agencées pour permettre la réception des éléments de fixation 313 et pour assurer le maintien du siège 310 au support de siège 320. Notamment, les ouvertures 331 peuvent être agencées pour permettre une liaison par encastrement des éléments de fixation 313. De manière encore plus préférée, les ouvertures 331 présentent un évidement dont le diamètre est adapté pour accueillir le goujon avec gorge.

Dans un mode de réalisation de l'invention, l'application d'une force horizontale au moyen de solidarisation/désolidarisation 330 selon un premier sens permet la liaison entre les éléments de fixation 313 et les orifices de fixation 323, tandis que l'application d'une force horizontale au moyen de solidarisation/désolidarisation 330 selon un deuxième sens, opposé au premier sens, permet la désolidarisation entre les éléments de fixation 313 et les orifices de fixation 323.

Plus particulièrement, lorsque les éléments de fixation 313 sont des goujons avec gorge, l'application d'une force horizontale au moyen de solidarisation/désolidarisation 330 selon un premier sens permet d'accueillir la partie rainurée dite « gorge » du goujon dans le deuxième évidement et ainsi assurer le maintien du siège 310 au support de siège 320.

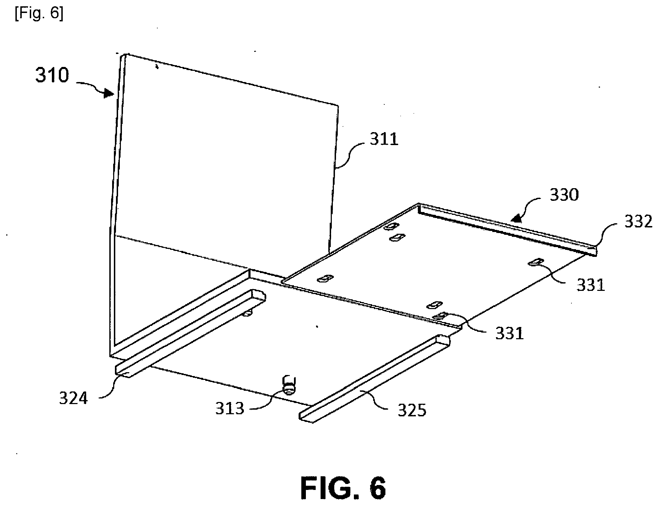

Comme présenté en figure 6, pour faciliter la solidarisation/désolidarisation du siège 310 au support de siège 320, le moyen de solidarisation/désolidarisation 330 peut comprendre un moyen de préhension 332 permettant à un utilisateur d'appliquer une force en tirant ou en poussant selon un premier ou un deuxième sens, le moyen de solidarisation/désolidarisation 330. Le moyen de préhension 332 peut prendre la forme d'un rebord vertical s'étendant le long d'un côté du moyen de solidarisation/désolidarisation 330.

En alternative ou en complément, afin de faciliter le positionnement du siège 310 et du moyen de solidarisation/désolidarisation 330 par rapport au support de siège 320, plus particulièrement des éléments de fixation 313 et des ouvertures 331 par rapport aux orifices de fixation 323, le support de siège 320 peut comprendre des supports de positionnement 324, 325 sur lesquels.le moyen de solidarisation/désolidarisation 330 peut être monté, par exemple dans un évidement pratiqué dans le support de siège 320, de manière à pouvoir coulisser. Les supports de positionnement 324, 325 présentent avantageusement des dimensions adaptées au moyen de solidarisation/désolidarisation 330.

Dans un autre mode de réalisation d'un système d'ameublement 2 selon l'invention, le siège 310 peut comprendre un dossier 311 relié à l'assise 312. Le siège 310 peut en outre être agencé pour se fixer au support de siège 320 selon une première position dans laquelle la pluralité des orifices de fixation 323 coïncident avec au moins deux éléments de fixation 313 et selon une deuxième position dans laquelle la pluralité des orifices de fixation 323 coïncident avec au moins deux autres éléments de fixation 313.

En effet, des orifices de fixation 323 peuvent être positionnés sur le support de siège 320 d'une façon telle que le siège 310 peut être fixé au support de siège 320 dans différentes positions par rotation dudit siège.

A titre d'exemple non limitatif, le siège 310 peut en outre être agencé pour se fixer au support de siège 320 selon une première position dans laquelle le dossier 311 est sensiblement perpendiculaire par rapport à un axe longitudinal de la première cloison 10. Le siège 310 peut en outre être agencé pour se fixer au support de siège 320 selon une deuxième position dans laquelle le dossier 311 est sensiblement parallèle par rapport à l'axe longitudinal de la première cloison 10.

Comme cela est illustré en figures 4A et 4B, le système d'ameublement 2 selon l'invention peut comprendre une pluralité de dispositifs d'assise 3. Dans cette représentation, quatre dispositifs d'assise 3 séparés, deux à deux, par un élément de rangement 3-1 amovible sont représentés, les dispositifs d'assise sont positionnés selon une position dans laquelle le dossier 311 est sensiblement perpendiculaire par rapport à un axe longitudinal de la première cloison 10. Cette position peut notamment être utilisée lorsque le véhicule n'est pas en mouvement. En outre, dans cette position, un matelas peut être disposé sur les assises 312 des dispositifs d'assise 3.

A l'inverse, lorsque le véhicule est en mouvement, les dispositifs d'assise peuvent être positionnés selon une position dans laquelle le dossier 311 est sensiblement parallèle par rapport à l'axe longitudinal de la première cloison 10. Ainsi par rotation des dispositifs d'assise 3, le dossier 311 du dispositif d'assise 3 peut venir se positionner le long d'un dossier 321 du support de siège 320, sensiblement perpendiculaire à un support d'assise 322 qui comprend les orifices de fixation 323. En outre, dans cette position, jusqu'à quatre utilisateurs peuvent prendre place lorsque le véhicule est en mouvement. Il est ainsi prévu que chaque dispositif d'assise 3 puisse comprendre une ceinture de sécurité, de type connu, qui permet de maintenir le corps de l'utilisateur solidaire du siège 310.

Selon un troisième aspect, l'invention porte sur un véhicule comprenant un système 1 pour l'aménagement intérieur selon l'invention ou un système d'ameublement 2 selon l'invention.

A titre d'exemples non limitatifs, le véhicule peut être de type récréatif motorisé, telles que des autocaravanes, ou remorquable, telles que les caravanes, de type fourgonnette ou fourgon.

Dans un mode de réalisation particulier, le véhicule peut en outre comprendre, en partie arrière, un hayon transparent 101 et un moyen d'ouverture réversible 102, 103.

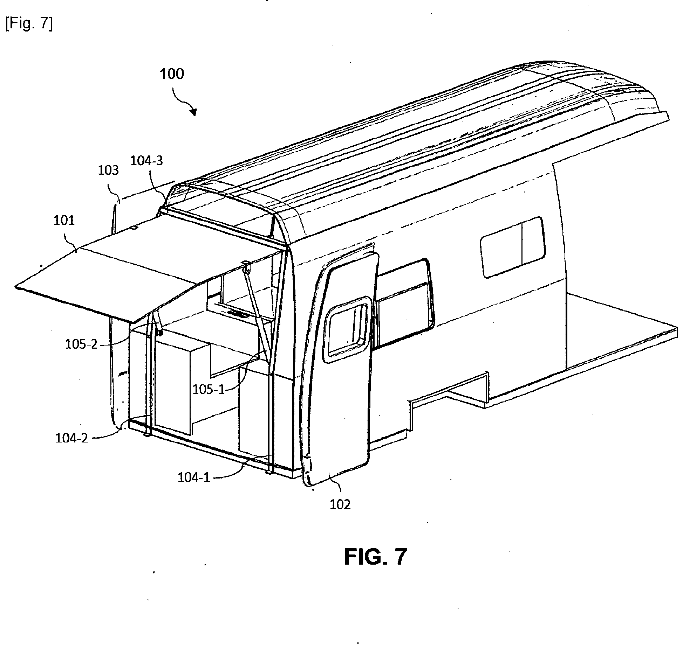

Le moyen d'ouverture réversible peut être composé d'un première et d'une deuxième porte battante 102, 103 comme illustré en figure 7. En outre, le moyen d'ouverture réversible est agencé pour passer d'une position ouverte permettant l'accès à la zone de chargement du véhicule à une position fermée.

Le hayon transparent 101 est monté sur un cadre de la partie arrière du véhicule. Le hayon transparent 101 est agencé pour passer d'une première configuration déployée, lorsque le moyen d'ouverture réversible 102, 103 est en position ouverte, à une deuxième configuration repliée, lorsque le moyen d'ouverture réversible 102, 103 est en position fermée. Dans la configuration déployée, le hayon transparent 101 est sensiblement parallèle à un axe longitudinal du véhicule 100, tandis qu'en configuration repliée, le hayon transparent 101 est sensiblement perpendiculaire à un axe longitudinal du véhicule 100.

Afin de permettre l'ouverture et la fermeture du hayon transparent 101, le véhicule 100 peut comprendre au moins un vérin de hayon 105-1, 105-2 dont la pression permet au hayon transparent 101 de rester en configuration déployée.

A titre d'exemple illustratif, le cadre sur lequel le hayon transparent 101 est monté peut-être une partie de carrosserie du véhicule 100.

En alternative, le cadre peut être adapté pour être fixé directement sur le plancher du véhicule et sur une partie de carrosserie du véhicule. Le cadre peut être composé de deux profilés longitudinaux 104-1, 104-2, fixés au plancher du véhicule, et s'étendant sur tout ou partie de la hauteur du moyen d'ouverture réversible 102, 103. Sur chaque profilé longitudinal 104-1, 104-2, peut être fixé un vérin de hayon 105-1, 105-2. La partie supérieure du hayon transparent 101 peut en outre être couplée à un profilé transversal 104-3, reliant les deux profilés longitudinaux, par au moins un élément de liaison permettant le passage de la configuration repliée à la configuration déployée.

## Revendications

1. Système (1) pour l'aménagement intérieur d'un véhicule, le système (1) comprenant un module d'aménagement d'une zone de chargement du véhicule, le module d'aménagement comportant :
- une première cloison (10) qui présente des dimensions adaptées pour permettre une séparation entre un poste de conduite et la zone de chargement du véhicule, la première cloison (10) comprenant en outre un passage central (11),
- une deuxième et une troisième cloisons (20, 30) sensiblement perpendiculaires à la première cloison (10),
- une quatrième et une cinquième cloisons (40, 50) sensiblement perpendiculaires à la deuxième et à la troisième cloison (20, 30) respectivement, de sorte que les première, deuxième et quatrième cloisons (10, 20, 40) forment un premier espace d'accueil de dimensions adaptées à un premier élément de mobilier (25) et, les première, troisième et cinquième cloisons (10, 30, 50) forment un deuxième espace d'accueil de dimensions adaptées à un deuxième élément de mobilier (35), **caractérisé en ce que** le module comporte en outre :
- au moins un premier moyen de guidage transversal positionné entre la deuxième cloison (20) et le passage central (11) et un deuxième moyen de guidage transversal positionné entre la troisième cloison (30) et le passage central (11), et **en ce que** la première cloison (10) et chaque moyen de guidage transversal sont adaptés pour permettre respectivement la fixation du premier ou du deuxième élément de mobilier (25, 35), et sont agencés pour que le premier ou le deuxième élément de mobilier (25, 35) passe d'une première configuration repliée, dans laquelle le premier élément de mobilier (25) ou le deuxième élément de mobilier (35) est positionné entre le passage central (11) et la deuxième ou la troisième cloison (20, 30), à une deuxième configuration déployée, dans laquelle le premier élément de mobilier (25) ou le deuxième élément de mobilier (35) comble le passage central (11).

2. Système (1) pour l'aménagement intérieur d'un véhicule selon la revendication 1, dans lequel la première cloison (10) comprend deux troisième moyen de guidage transversal respectivement adaptés pour permettre la fixation du premier élément de mobilier (25) et du deuxième élément de mobilier (35), les deux troisième moyen de guidage transversal étant respectivement agencés pour que le premier élément de mobilier (25) et le deuxième élément de mobilier (35) passent de la première configuration repliée à la deuxième configuration déployée.

3. Système (1) pour l'aménagement intérieur d'un véhicule selon l'une des revendications 1 ou 2, dans lequel le premier élément de mobilier (25) est positionné entre la quatrième cloison (40) et la première cloison (10) et le deuxième élément de mobilier (35) est positionné entre la cinquième cloison (50) et la première cloison (10).

4. Système (1) pour l'aménagement intérieur d'un véhicule selon l'une quelconque des revendications 1 à 3, dans lequel le premier élément de mobilier (25) est agencé pour pouvoir passer en configuration déployée lorsque le deuxième élément de mobilier (35) est en position repliée et inversement.

5. Système (1) pour l'aménagement intérieur d'un véhicule selon l'une quelconque des revendications 1 à 4, dans lequel le module d'aménagement comporte une sixième cloison (60) sensiblement perpendiculaire à la troisième cloison (30) de sorte que les troisième, cinquième et sixième cloisons (30, 50, 60) forment un troisième espace d'accueil adapté pour accueillir une arrivée et une évacuation d'eau.

6. Système (1) pour l'aménagement intérieur d'un véhicule selon l'une quelconque des revendications 1 à 5, dans lequel le premier élément de mobilier (25) correspond à une cabine équipée d'une porte, la cabine étant agencée pour permettre, en configuration déployée, l'ouverture et la fermeture de ladite porte.

7. Système d'ameublement (2) d'une zone de chargement d'un véhicule, ledit système comprenant :
- un système (1) pour l'aménagement intérieur d'un véhicule selon l'une quelconque des revendications 1 à 6,
- un dispositif d'assise (3) comportant :
o un siège (310) comprenant une assise (312) sur laquelle sont montées une pluralité d'éléments de fixation (313),
o un support de siège (320) comprenant une pluralité d'orifices de fixation (323) agencées pour recevoir les éléments de fixation (313),
o un moyen de solidarisation/désolidarisation (330) positionné dans le support de siège (320) et comprenant une pluralité d'ouvertures (331) adaptées pour permettre le passage des éléments de fixation (313), le moyen de solidarisation/désolidarisation (330) étant en outre agencé pour permettre une fixation réversible entre le siège (310) et le support de siège (320).

8. Système d'ameublement (2) selon la revendication 7, dans lequel le siège (310) comprend un dossier (311) relié à l'assise (312), et dans lequel le siège (310) est agencé pour se fixer au support de siège (320) selon une première position dans laquelle la pluralité des orifices de fixation (323) coïncident avec au moins deux éléments de fixation (313) et selon une deuxième position dans laquelle la pluralité des orifices de fixation (323) coïncident avec au moins deux autres éléments de fixation (313).

9. Système d'ameublement (2) selon la revendication 8, dans lequel :
- en première position, le dossier (311) est sensiblement perpendiculaire par rapport à un axe longitudinal de la première cloison (10),
- en deuxième position, le dossier (311) est sensiblement parallèle par rapport à l'axe longitudinal de la première cloison (10).

10. Véhicule (100) comprenant un système (1) pour l'aménagement intérieur selon l'une quelconque des revendications 1 à 6 ou un système d'ameublement (2) selon l'une quelconque des revendications 7 à 9.

11. Véhicule (100) selon la revendication 10, ledit véhicule comprenant, en partie arrière, un moyen d'ouverture réversible (102, 103) agencé pour passer d'une position ouverte permettant l'accès à la zone de chargement du véhicule à une position fermée, ledit véhicule comprenant un hayon transparent (101) monté sur un cadre de la partie arrière du véhicule, ledit hayon transparent (101) étant agencé pour passer d'une première configuration déployée, lorsque le moyen d'ouverture réversible (102, 103) est en position ouverte, à une deuxième configuration repliée, lorsque le moyen d'ouverture réversible (102, 103) est en position fermée.

## Patentansprüche

1. System (1) zur Inneneinrichtung eines Fahrzeugs, wobei das System (1) ein Modul zur Einrichtung einer Ladefläche des Fahrzeugs umfasst, wobei das Einrichtungsmodul aufweist:
- eine erste Trennwand (10), deren Abmessungen für eine Trennung zwischen einem Fahrerplatz und der Ladefläche des Fahrzeugs geeignet sind, wobei die erste Trennwand (10) ferner einen mittigen Durchgang (11) umfasst,
- eine zweite und eine dritte Trennwand (20, 30), die im Wesentlichen senkrecht zur ersten Trennwand (10) stehen,
- eine vierte und eine fünfte Trennwand (40, 50), die im Wesentlichen senkrecht jeweils zur zweiten und zur dritten Trennwand (20, 30) stehen, so dass die erste, zweite und vierte Trennwand (10, 20, 40) einen ersten Aufnahmeraum bilden, dessen Abmessungen an ein erstes Möbelelement (25) angepasst sind, und die erste, dritte und fünfte Trennwand (10, 30, 50) einen zweiten Aufnahmeraum bilden, dessen Abmessungen an ein zweites Möbelelement (35) angepasst sind,
**dadurch gekennzeichnet, dass** das Modul ferner aufweist:
- mindestens ein erstes Querführungsmittel, das zwischen der zweiten Trennwand (20) und dem mittigen Durchgang (11) positioniert ist, und ein zweites Querführungsmittel, das zwischen der dritten Trennwand (30) und dem mittigen Durchgang (11) positioniert ist,
und dass die erste Trennwand (10) und jedes Querführungsmittel jeweils zur Befestigung des ersten oder des zweiten Möbelelements (25, 35) geeignet und eingerichtet sind, damit das erste oder das zweite Möbelelement (25, 35) aus einer ersten eingeklappten Konfiguration, in der das erste Möbelelement (25) oder das zweite Möbelelement (35) zwischen dem mittigen Durchgang (11) und der zweiten oder der dritten Trennwand (20, 30) positioniert ist, in eine zweite ausgeklappte Konfiguration wechselt, in der das erste Möbelelement (25) oder das zweite Möbelelement (35) den mittigen Durchgang (11) ausfüllt.

2. System (1) zur Inneneinrichtung eines Fahrzeugs nach Anspruch 1, wobei die erste Trennwand (10) zwei dritte Querführungsmittel umfasst, die jeweils zur Befestigung des ersten Möbelelements (25) und des zweiten Möbelelements (35) geeignet sind, wobei die zwei dritten Querführungsmittel jeweils eingerichtet sind, damit das erste Möbelelement (25) und das zweite Möbelelement (35) aus der ersten eingeklappten Konfiguration in die zweite ausgeklappte Konfiguration wechseln.

3. System (1) zur Inneneinrichtung eines Fahrzeugs nach einem der Ansprüche 1 oder 2, wobei das erste Möbelelement (25) zwischen der vierten Trennwand (40) und der ersten Trennwand (10) positioniert ist und das zweite Möbelelement (35) zwischen der fünften Trennwand (50) und der ersten Trennwand (10) positioniert ist.

4. System (1) zur Inneneinrichtung eines Fahrzeugs nach einem der Ansprüche 1 bis 3, wobei das erste Möbelelement (25) eingerichtet ist, um in die ausgeklappte Konfiguration wechseln zu können, wenn sich das zweite Möbelelement (35) in eingeklappter Position befindet, und umgekehrt.

5. System (1) zur Inneneinrichtung eines Fahrzeugs nach einem der Ansprüche 1 bis 4, wobei das Einrichtungsmodul eine sechste Trennwand (60) aufweist, die im Wesentlichen senkrecht zur dritten Trennwand (30) steht, so dass die dritte, fünfte und sechste Trennwand (30, 50, 60) einen dritten Aufnahmeraum bilden, der zur Aufnahme einer Wasserzufuhr und -ableitung geeignet ist.

6. System (1) zur Inneneinrichtung eines Fahrzeugs nach einem der Ansprüche 1 bis 5, wobei das erste Möbelelement (25) einer mit einer Tür ausgestatteten Kabine entspricht, wobei die Kabine eingerichtet ist, um in der ausgeklappten Konfiguration das Öffnen und das Schließen der Tür zu ermöglichen.

7. System (2) zur Möblierung einer Ladefläche eines Fahrzeugs, wobei das System umfasst:
- ein System (1) zur Inneneinrichtung eines Fahrzeugs nach einem der Ansprüche 1 bis 6,
- eine Sitzvorrichtung (3), die aufweist:
∘ einen Sitz (310), der eine Sitzfläche (312) umfasst, auf der eine Vielzahl von Befestigungselementen (313) angebracht sind,
∘ eine Sitzhalterung (320), die eine Vielzahl von Befestigungsöffnungen (323) umfasst, die zur Aufnahme der Befestigungselemente (313) eingerichtet sind,
∘ eine Verbindungs-/Löseeinrichtung (330), die in der Sitzhalterung (320) positioniert ist und eine Vielzahl von Öffnungen (331) umfasst, die geeignet sind, um den Durchgang der Befestigungselemente (313) zu ermöglichen, wobei die Verbindungs-/Löseeinrichtung (330) ferner eingerichtet ist, um eine reversible Befestigung zwischen dem Sitz (310) und der Sitzhalterung (320) zu ermöglichen.

8. Möblierungssystem (2) nach Anspruch 7, wobei der Sitz (310) eine Rückenlehne (311) umfasst, die mit der Sitzfläche (312) verbunden ist, und wobei der Sitz (310) zur Befestigung an der Sitzhalterung (320) in einer ersten Position, in der die Vielzahl der Befestigungsöffnungen (323) mit mindestens zwei Befestigungselementen (313) übereinstimmen, und in einer zweiten Position, in der die Vielzahl von Befestigungsöffnungen (323) mit mindestens zwei weiteren Befestigungselementen (313) übereinstimmen, eingerichtet ist.

9. Möblierungssystem (2) nach Anspruch 8, wobei:
- in der ersten Position die Rückenlehne (311) im Wesentlichen senkrecht zu einer Längsachse der ersten Trennwand (10) steht,
- in der zweiten Position die Rückenlehne (311) im Wesentlichen parallel zur Längsachse der ersten Trennwand (10) steht.

10. Fahrzeug (100), umfassend ein System (1) zur Inneneinrichtung nach einem der Ansprüche 1 bis 6 oder ein Möblierungssystem (2) nach einem der Ansprüche 7 bis 9.

11. Fahrzeug (100) nach Anspruch 10, wobei das Fahrzeug im hinteren Teil ein reversibles Öffnungsmittel (102, 103) umfasst, die eingerichtet ist, um aus einer offenen Position, die den Zugang zur Ladefläche des Fahrzeugs ermöglicht, in eine geschlossene Position zu wechseln, wobei das Fahrzeug eine transparente Heckklappe (101) umfasst, die an einem Rahmen im hinteren Teil des Fahrzeugs angebracht ist, wobei die transparente Heckklappe (101) eingerichtet ist, um aus einer ersten ausgeklappten Konfiguration, wenn das reversible Öffnungsmittel (102, 103) in geöffneter Position ist, in eine zweite eingeklappten Konfiguration zu wechseln, wenn das reversible Öffnungsmittel (102, 103) in geschlossener Position ist.

## Claims

1. A system (1) for the interior layout of a vehicle, the system (1) comprising a module for the layout of a loading area of the vehicle, the layout module including:
- a first partition (10) which has dimensions adapted to allow a separation between a driver's compartment and the loading area of the vehicle, the first partition (10) further comprising a central passage (11),
- a second and a third partition (20, 30) substantially perpendicular to the first partition (10),
- a fourth and a fifth partition (40, 50) substantially perpendicular to the second and to the third partition (20, 30) respectively, so that the first, second and fourth partitions (10, 20, 40) form a first accommodation space of dimensions adapted to a first furniture element (25) and, the first, third and fifth partitions (10, 30, 50) form a second accommodation space of dimensions adapted to a second furniture element (35),
**characterized in that** the module further comprises:
- at least a first transverse guide means positioned between the second partition (20) and the central passage (11) and a second transverse guide means positioned between the third partition (30) and the central passage (11), and **in that**
the first partition (10) and each transverse guide means adapted to allow respectively the fixing of the first or of the second furniture element (25, 35), and
arranged so that the first or the second furniture element (25, 35) switches from a first folded configuration in which the first furniture element (25) or the second furniture element (35) is positioned between the central passage (11) and the second or the third partition (20, 30), to a second deployed configuration in which the first furniture element (25) or the second furniture element (35) fills the central passage (11).

2. The system (1) for the interior layout of a vehicle according to claim 1, wherein the first partition (10) comprises two third transverse guide means respectively adapted to allow the fixing of the first furniture element (25) and of the second furniture element (35), the two third transverse guide means being respectively arranged so that the first furniture element (25) and the second furniture element (35) switch from the first folded configuration to the second deployed configuration.

3. The system (1) for the interior layout of a vehicle according to any of claims 1 or 2, wherein the first furniture element (25) is positioned between the fourth partition (40) and the first partition (10) and the second furniture element (35) is positioned between the fifth partition (50) and the first partition (10).

4. The system (1) for the interior layout of a vehicle according to any one of claims 1 to 3, wherein the first furniture element (25) is arranged to be able to switch to the deployed configuration when the second furniture element (35) is in the folded position and vice versa.

5. The system (1) for the interior layout of a vehicle according to any one of claims 1 to 4, wherein the layout module includes a sixth partition (60) substantially perpendicular to the third partition (30) so that the third, fifth and sixth partitions (30, 50, 60) form a third accommodation space adapted to accommodate a water supply and discharge.

6. The system (1) for the interior layout of a vehicle according to any one of claims 1 to 5, wherein the first furniture element (25) corresponds to a stall equipped with a door, the stall being arranged to allow, in the deployed configuration, the opening and closing of said door.

7. A system (2) for furnishing a loading area of a vehicle, said system comprising:
- a system (1) for the interior layout of a vehicle according to any one of claims 1 to 6,
- a sitting device (3) including:
∘ a seat (310) comprising a sitting (312) on which a plurality of fixing elements (313) is mounted,
∘ a seat support (320) comprising a plurality of fixing orifices (323) arranged to receive the fixing elements (313),
∘ a securing/uncoupling means (330) positioned in the seat support (320) and comprising a plurality of openings (331) adapted to allow the passage of the fixing elements (313), the securing/uncoupling means (330) being further arranged to allow a reversible fixing between the seat (310) and the seat support (320).

8. The furnishing system (2) according to claim 7, wherein the seat (310) comprises a backrest (311) connected to the sitting (312), and wherein the seat (310) is arranged to be fixed to the seat support (320) along a first position in which the plurality of fixing orifices (323) coincide with at least two fixing elements (313) and along a second position in which the plurality of fixing orifices (323) coincide with at least two other fixing elements (313).

9. The furnishing system (2) according to claim 8, wherein:
- in the first position, the backrest (311) is substantially perpendicular to a longitudinal axis of the first partition (10),
- in the second position, the backrest (311) is substantially parallel to the longitudinal axis of the first partition (10).

10. A vehicle (100) comprising a system (1) for the interior layout according to any one of claims 1 to 6 or a furnishing system (2) according to any one of claims 7 to 9.

11. The vehicle (100) according to claim 10, said vehicle comprising, in the rear part, reversible opening means (102, 103) arranged to switch from an open position allowing access to the loading area of the vehicle to a closed position, said vehicle comprising a transparent tailgate (101) mounted on a frame of the rear part of the vehicle, said transparent tailgate (101) being arranged to switch from a first deployed configuration when the reversible opening means (102, 103) is in the open position, to a second folded configuration when the reversible opening means (102, 103) is in the closed position.
